# EUROPÄISCHE PATENTSCHRIFT

(11) **EP 2 091 680 B1**
(45) Veröffentlichungstag und Bekanntmachung des Hinweises auf die Patenterteilung: **22.09.2010**
(21) Anmeldenummer: 07857219.5
(22) Anmeldetag: 15.11.2007
(51) Int. Cl.: B23B 5/32, B23Q 5/14

(54) **PORTAL-RADSATZDREHMASCHINE**
PORTAL WHEELSET LATHE
TOUR À PORTIQUE POUR ESSIEUX

(30) Priorität: 23.11.2006 DE 102006055299
(43) Veröffentlichungstag der Anmeldung: 26.08.2009
(73) Patentinhaber: Hegenscheidt-MFD GmbH & Co. KG, 41812 Erkelenz (DE)
(72) Erfinder: NAUMANN, Hans J. Dr., 09117 Chemnitz (DE)
(74) Vertreter: Cohausz & Florack
(86) Internationale Anmeldenummer: PCT/EP2007/062422
(87) Internationale Veröffentlichungsnummer: WO 2008/061937

(56) Entgegenhaltungen:
- WO-A-2006/027114
- CZ-A3- 9 203 416
- GB-A- 1 409 651
- US-A- 3 347 117
- US-A- 3 535 962
- US-A- 4 033 209
- US-A- 4 116 094
- US-A- 4 265 149
- US-A- 4 276 793
- ANONYM: "Übersetzung (Technik)" WIKIPEDIA, DER FREIEN ENZYKLOPÄDIE, [Online] XP002476469 Gefunden im Internet: URL:http://de.wikipedia.org/wiki/%C3%9Cber setzung_%28Technik%29#Mechanik> [gefunden am 2008-04-10]

## Beschreibung

Die Erfindung betrifft eine Portal-Radsatzdrehmaschine für Eisenbahnradsätze gemäß dem Oberbegriff des Anspruchs 1. Eine solche Maschine ist beispielweise aus US 4 265 149 A bekannt.

Aus einem alten Firmenprospekt der Anmelderin ist eine "Portal-Radsatz-Drehmaschine Typ 165" bekannt. Dabei handelt es sich um eine vollautomatisierte Hochleistungsdrehmaschine in Portalbauweise. Die bekannte Portal-Radsatzdrehmaschine ist geeignet für die Bearbeitung der Radprofile gelaufener, neubereifter, neumontierter und neuer Radsätze; innere und äußere Stirnflächen der Radsätze können ebenfalls bearbeitet werden. Die bekannte Portal-Radsatzdrehmaschine ist für alle Arten von Lokomotiv-, Triebwagen-, Reisezugwagen- und Güterwagen-Radsätzen eingerichtet. Auf dem Radsatz aufgebaute Rollenlagergehäuse, Zahnräder, Getriebe, Bremsscheiben und Hohlwellen sind dabei nicht hinderlich.

Der Maschinenständer der bekannten Portal-Radsatzdrehmaschine überbrückt "portalartig" ein Werkstattgleis. Beide Spindelstöcke sind in Richtungen quer zum Werkstattgleis verschiebbar. Auf jedem Spindelstock ist jeweils ein Hauptantrieb mit Motor und Getriebe angeordnet. Der Raum zwischen den beiden Spindelstöcken ist völlig frei. Die Radsätze rollen ungehindert in die bekannte Portal-Radsatzdrehmaschine hinein und wieder heraus.

Die Hauptspindeln werden von je einem Axialrollenlager großen Durchmessers axial abgestützt, das unmittelbar am Planscheibenzahnkranz anliegt. Das große Axiallager überträgt die auftretenden Axialkräfte direkt auf das Spindelstockgehäuse. Das Axiallager hat einen Durchmesser von 1100 mm. Beide Planscheiben werden von je einem Motor angetrieben; beide Motoren sind elektrisch synchronisiert.

Das Mitnahmesystem für den Radsatz ist so ausgelegt, dass trotz vieler Spannvorgänge an unterschiedlichen Radsätzen während einer Bearbeitungsschicht nur minimale Spannkerben oder Radreifenverspannungen an den Rädern am Radsatz zu verzeichnen sind. Um die vielfältigen, eingangs genannten Radsätze wirtschaftlich bearbeiten zu können, ist eine automatische Spannkreisdurchmesserverstellung der Mitnahmesysteme vorgesehen. Es stehen wahlweise drei unterschiedliche Mitnahmesysteme zur Verfügung:
4-Backen-Axialmitnahme oder 3-Backen-Radialmitnahme oder 3-Backen-Radial Axialmitnahme.

Ein treffsicheres, automatisches Zentrieren der Radsätze zwecks Einspannung zwischen den Pinolen der Hauptspindeln an Radsätzen unterschiedlichen Gewichts wird durch ein elektronisches Synchronisieren der Radsatzmitten mit der Maschinenmitte erreicht. Ein im Maschinensupport integrierter Taster gewährleistet einen einwandfreien Anhebestopp für jeden Radsatzdurchmesser; die Spurkranzkuppe wird dabei als Zentrierreferenz benutzt. Zum Anheben und zur Mittenzentrierung des Radsatzes dient ein Radsatzhebebock, der zwischen den Spindelstöcken im Werkstattgleis angeordnet ist. Der hydraulisch betätigte Radsatzhebebock wird während der Bearbeitung des Radsatzes automatisch abgesenkt. Der damit freigegebene großflächige Späneabfluss stellt eine wesentliche Voraussetzung für einen "vollautomatisierten" Maschinenbetrieb dar.

Soweit die Vorzüge und Vorteile der an sich bekannten und erfolgreichen Portal-Radsatzdrehmaschine vom Typ 165 CNC. Daraus ergibt sich die Aufgabe für die vorliegende Erfindung, den Antrieb der Hauptspindel weiter zu verbessern und preisgünstiger zu machen. Daneben sollen zugleich die Wartungskosten der Maschine gesenkt werden, die sich im Laufe von deren Betriebszeit einstellen.

Erfindungsgemäß wird die Aufgabe durch die Merkmale des Anspruchs 1 gelöst.

Die Erfindung besteht darin, dass die erste Stufe des Vorgeleges als Riementrieb, die zweite Stufe als Planetengetriebe und die dritte Stufe als Stirnradgetriebe ausgebildet sind. Alle drei Arten von Getrieben sind im Maschinenbau gängige und häufig verwendete Elemente, welche einen günstigen Marktpreis haben. Die Ausgestaltung der ersten Getriebestufe als Riementrieb hat zusätzlich den Vorteil, dass man einen "weichen" Antrieb der Planscheibe erhält. Der "weiche" Antrieb der Werkzeugmaschine schont die Schneidwerkzeuge und verleiht ihnen eine höhere Standzeit.

Von besonderem Vorteil ist es, wenn die einzelnen Getriebestufen Übersetzungsverhältnisse erhalten, wie sie in den geltenden Patentansprüchen 3 bis 5 beansprucht werden. Im Ergebnis erhält man sodann ein Gesamtübersetzungsverhältnis aller Getriebestufen, das zwischen 20 zu 1 und 160 zu 1, vorzugsweise bei 60,51 zu 1 liegt.

Die bekannten Portal-Radsatzdrehmaschinen vom Typ 165 sind mit einem Zwillingssupport ausgestattet. Ein derartiger Zwillingssupport beschränkt die einzelnen Werkzeugsupporte auf die Profilbearbeitung der Radscheiben. Im vorliegenden Fall hat auch das Portal der Portal-Radsatzdrehmaschine eine Neugestaltung erfahren derart, dass man zwei voneinander unabhängige Werkzeugsupporte längs- und quer-verschiebbar am Portal angeordnet hat. Diese unabhängig voneinander operierbaren Werkzeugsupporte ermöglichen sowohl die Reprofilierung von Radscheiben, als auch die Reprofilierung von Bremsscheiben, die sich zwischen den Radscheiben auf der Radsatzwelle befinden.

Als weitergehende Verbesserung der bekannten Portal-Radsatzdrehmaschine ist vorgesehen, Elektromotoren für den Antrieb der Hauptspindeln einzusetzen, deren Drehzahlen in dem Bereich zwischen 750 Umdrehungen pro Minute und 4500 Umdrehungen pro Minute veränderbar sind.

Darüber hinaus ist die Portal-Radsatzdrehmaschine nach dem Baukastenprinzip aufgebaut. Abgesehen von den beiden Spindelstockgehäusen, die jeweils eine rechtsseitige und eine linksseitige Ausgestaltung haben, sind die Lager der Hauptspindel, die Planscheiben, die Zentriereinrichtung und die Antriebe völlig gleichartig. Aufgrund der Gleichartigkeit sind die benannten Elemente auch untereinander austauschbar. Die Gleichartigkeit stellt eine preiswerten Vorteil bei der Fertigung dar.

Schließlich sind die Spindelstöcke neben ihrer Eignung für Portal-Radsatzdrehmaschinen auch noch dazu geeignet, bei Flachbett-Radsatzdrehmaschinen verwendet zu werden. Im Prinzip sind Flachbett-Radsatzdrehmaschinen ähnlich ausgestaltet wie Portal-Radsatzdrehmaschinen, jedoch wird im Gegensatz dazu, aufgrund des niedrigen Maschinenbetts, der Radsatz vom Kran in die Flachbett-Radsatzdrehmaschine hineingehoben, oder über ein längsverschiebbares Gleisstück hineingerollt, das während der Bearbeitung zurückgezogen wird.

Nachfolgend wird die Erfindung an einem Ausführungsbeispiel näher beschrieben.

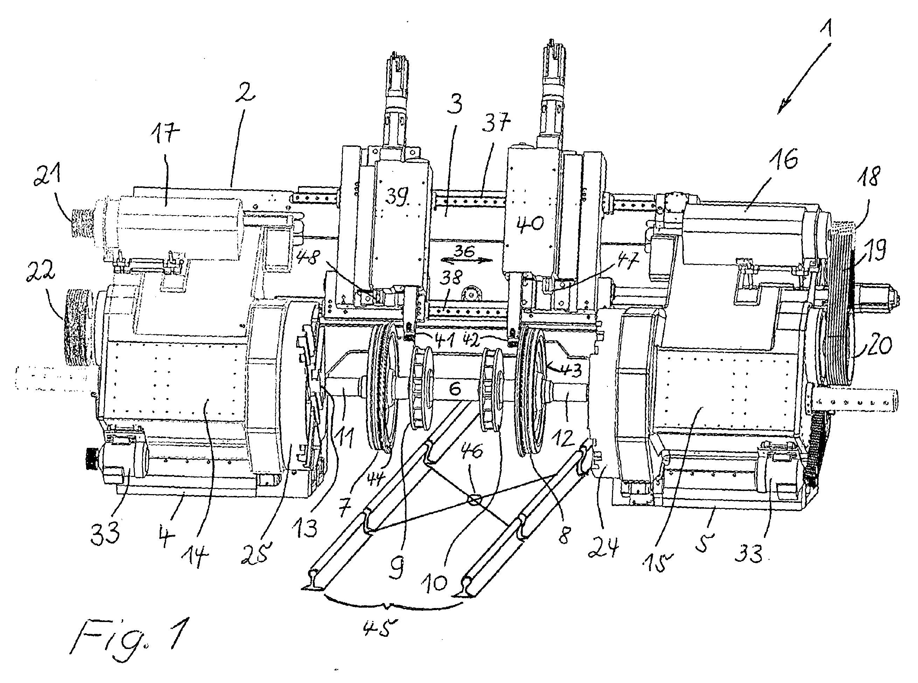

Es zeigen jeweils in perspektivischer Ansicht, in verkleinertem Maßstab sowie in vereinfachter Wiedergabe die
- Fig. 1 eine Gesamtansicht einer Portal-Radsatzdrehmaschine,
- Fig. 2 den rechtsseitigen Spindelstock und
- Fig. 3 das Getriebeschema des Antriebs der Hauptspindel der Portal-Radsatzdrehmaschine.

Die Portal-Radsatzdrehmaschine 1 hat einen Maschinenständer 2, welcher ein Werkstattgleis 45 portalartig überbrückt. Der Maschinenständer 2 besteht aus dem Querbalken 3, welcher zu beiden Seiten des Werkstattgleises 45 jeweils auf Stützen 4 und 5 aufliegt. Die Stützen 4 und 5 wiederum sind über einen Unterzug (nicht gezeigt) miteinander verbunden. In der Portal-Radsatzdrehmaschine 1 ist ein Radsatz 6 aufgenommen, welcher die beiden Radscheiben 7 und 8, sowie zwei Bremsscheiben 9 und 10 aufweist. An den Achsschenkeln 11 und 12 ist der Radsatz 6 in der Portal-Radsatzdrehmaschine 1 aufgenommen und zentriert. Die Aufnahme und Zentrierung des Radsatzes 6 an seinen Achsschenkeln 11 und 12 erfolgt mit Hilfe von Pinolen 13, wie sie am linken Spindelstock 14 der Portal-Radsatzdrehmaschine 1 angedeutet sind. Eine der Pinole 13 entsprechende Pinole befindet sich auch im rechten Spindelstock 15 der Portal-Radsatzdrehmaschine 1. Das Hineinrollen des Radsatzes 6 und das Anheben zur Aufnahme zwischen den Pinolen 13 erfolgt mit Hilfe eines Radsatzhebebocks 46 wie er an sich bekannt ist.

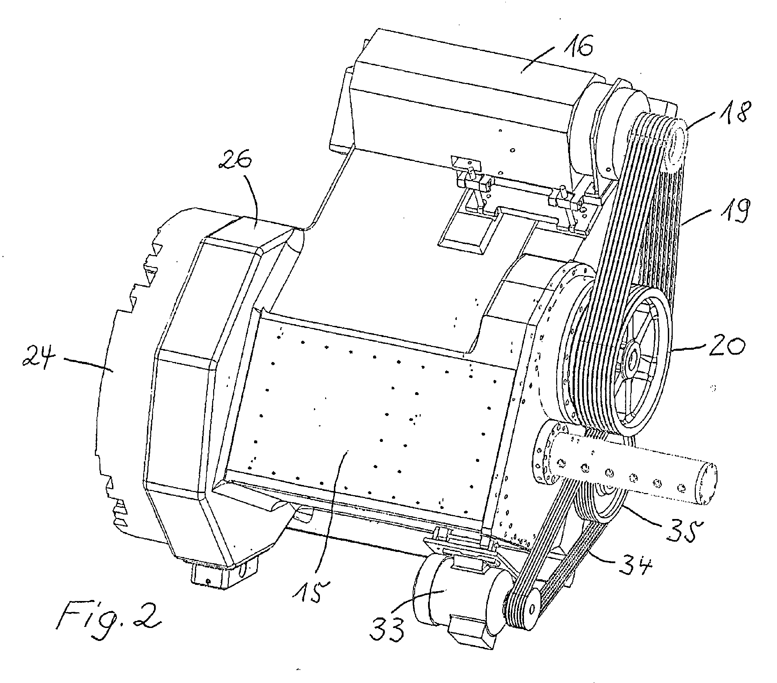

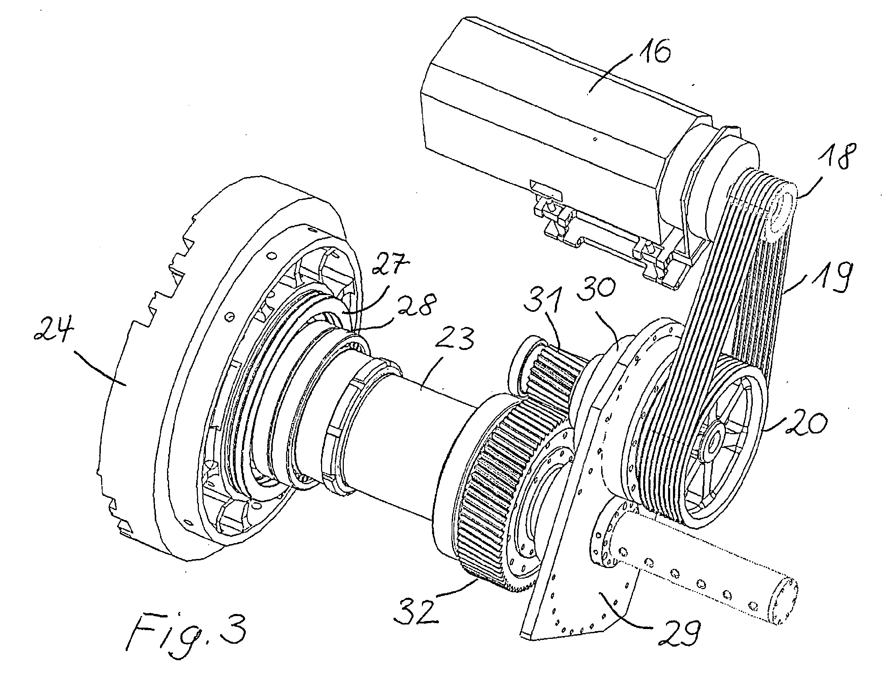

Bei dem in der Fig. 2 gezeigten rechten Spindelstock 15 erkennt man einen Antriebsmotor 16, der auf dem rechten Spindelstock 15 sitzt. Die Drehzahlen der Motoren 16 und 17 der beiden Spindelstöcke 14 und 15 sind miteinander synchronisierbar und im Bereich zwischen 750 Umdrehungen pro Minute und 4500 Umdrehungen pro Minute veränderbar. Um das Antriebsritzel 18 des Motors 16 ist ein mehrfacher Keilriementrieb 19 geschlungen, der auf eine Riemenscheibe 20 wirkt. Den Maschinenelementen 18 und 20 entsprechende Maschinenelemente 21 und 22 weist auch der linke Spindelstock 14 auf. Zur Vereinfachung der Darstellung wurde der Keilriementrieb zwischen den beiden Riemenscheiben 21 und 22 des linken Spindelstocks 14 weggelassen. Die Antriebsmotoren 16, 17 mit ihren Ritzeln 18 und 21, der Keilriementrieb 19 und die Riemenscheiben 20 und 22 bilden jeweils die erste Getriebestufe des Antriebs der beiden Hauptspindeln 23 der Spindelstöcke 14 und 15. Die beiden Hauptspindeln 23 der beiden Spindelstöcke 14 und 15 sind identisch, weshalb sich die Fig. 3 darauf beschränkt, nur die Hauptspindel 23 des rechten Spindelstocks 15 darzustellen. Die Hauptspindel 23 trägt an ihrem Vorderen, dem Radsatz 6 zugewandten Ende eine Planscheibe 24. Eine entsprechende Planscheibe 25 gehört auch zum linken Spindelstock 14. Die Planscheiben 24 und 25 weisen weitere Einrichtungen (nicht gezeigt) auf, die zur drehenden Mitnahme des Radsatzes 6 an seinen beiden Radscheiben 7 und 8 vorgesehen und im übrigen auch aus dem Stande der Technik hineinreichend bekannt sind.

Die Planscheibe 24 ist im Gehäuse 26 des rechten Spindelkastens 15 zunächst in einem Axiallager 27 gelagert, das sich durch einen wesentlich geringeren Durchmesser auszeichnet, als die Durchmesser jener Axiallager, die bereits aus dem Stande der Technik bekannt sind. Weitere Abstützungen der Hauptspindel 23 bestehen aus einem vorderen Radiallager 28 und einem hinteren Radiallager (nicht gezeigt) am rückwärtigen Ende 29 des Spindelgehäuses 26.

Die Riemenscheibe 20 bildet den Eingang eines Planetengetriebes 30, dessen Ausgang ein stirnradverzahntes Ritzel 31 bildet. Das stirnradverzahnte Ritzel 31 kämmt mit einem Stirnrad 32, welches auf der Hauptspindel 23 drehfest befestigt ist. Das Übersetzungsverhältnis i₁ zwischen dem Motorritzel 18 und der Riemenscheibe 20 beträgt 2,8 zu 1, das Übersetzungsverhältnis i₂ innerhalb des Planetengetriebes 30 beträgt 6,14 zu 1 und das Übersetzungsverhältnis i₃ zwischen den beiden Stirnrädern 31 und 32 beträgt 3,52 zu 1, wodurch sich ein Gesamtübersetzungsverhältnis i₄ zwischen dem Antriebsmotor 16 und der Hauptspindel 23 in der Größe von i₄ = 60,51 zu 1 ergibt. Weitere Motoren 33 auf den Stützen 4 und 5 mit zugehörigem Riementrieb 34 und Riemenscheibe 35 sind dazu vorgesehen, die beiden Spindelstöcke 14 und 15 in der axialen Richtung 36 zu verstellen.

An Horizontalführungen 37 und 38 des Querbalkens 3 sind zwei Werkzeugsupporte 39 und 40 geführt. Die Werkzeugsupporte 39 und 40 tragen jeweils Bearbeitungswerkzeuge 41 und 42, mit denen die Profilierung der Bremsscheiben 9 und 10 durchgeführt werden kann. Für die Umrissprofilierung der Radscheiben 7 und 8 sind weitere Drehwerkzeuge 47 und 48 vorgesehen, die an den Werkzeugsupporten 39 und 40 angedeutet sind. Mit Hilfe der Werkzeuge 47 und 48 können die Radscheiben 7 und 8 darüber hinaus auch auf ihren Außenseiten 43 und auf ihren Innenseiten 44 stirnseitig durch Drehen bearbeitet werden. Die gesamte Bearbeitung der Umrissprofile der Radscheiben 7 und 8, der Bremsscheiben 9 und 10, der Außenseiten 43 und der Innenseiten 44 des Radsatzes 6 mit Hilfe der Bearbeitungswerkzeuge 41 und 42 bzw. 47 und 48 erfolgt spanabhebend.

### Bezugszeichenliste

- 1: Portal-Radsatzdrehmaschine
- 2: Maschinenständer
- 3: Querbalken
- 4: Stütze
- 5: Stütze
- 6: Radsatz
- 7: Radscheibe
- 8: Radscheibe
- 9: Bremsscheibe
- 10: Bremsscheibe
- 11: Achsschenkel
- 12: Achsschenkel
- 13: Pinole
- 14: linker Spindelstock
- 15: rechter Spindelstock
- 16: Antriebsmotor
- 17: Antriebsmotor
- 18: Antriebsritzel
- 19: Keilriementrieb
- 20: Riemenscheibe
- 21: Antriebsritzel
- 22: Riemenscheibe
- 23: Hauptspindel
- 24: rechte Planscheibe
- 25: linke Planscheibe
- 26: Spindelgehäuse
- 27: Axiallager
- 28: Radiallager
- 29: rückwärtiges Ende
- 30: Planetengetriebe
- 31: stirnradverzahntes Ritzel
- 32: Motor
- 33: Motor
- 34: Riementrieb
- 35: Riemenscheibe
- 36: Axialrichtung
- 37: Horizontalführung
- 38: Horizontalführungen
- 39: Werkzeugsupport
- 40: Werkzeugsupport
- 41: Bearbeitungswerkzeug
- 42: Bearbeitungswerkzeug
- 43: Radsatzaußenseite
- 44: Radsatzinnenseite
- 45: Werkstattgleis
- 46: Radsatzhebebock
- 47: Drehwerkzeug
- 48: Drehwerkzeug

## Patentansprüche

1. Portal-Radsatzdrehmaschine für Eisenbahnradsätze mit einem Maschinenständer, der ein Werkstattgleis portalartig überbrückt und auf jeder Seite des Werkstattgleises einen Spindelstock trägt mit einer Hauptspindel und einem Hauptantrieb für die Hauptspindel, mit einem elektrisch synchronisierbaren Motor und einem Getriebe, wobei die Hauptspindel eine Planscheibe aufweist,
**dadurch gekennzeichnet, dass** das Getriebe (16, 17, 18, 19, 20, 21, 22, 30, 31) für den Antrieb der Hauptspindel (23) eines Spindelstocks (14, 15) als mehrstufiges Vorgelege (19, 30, 31, 32) ausgestaltet ist, das einen Riementrieb (18, 19, 20) ein Planetengetriebe (20, 30, 31) und ein Stirnradgetriebe (31, 32) aufweist und die Drehbewegung der Hauptspindel (23) an dem der Planscheibe (24, 25) abgewandten Ende (29) in die Hauptspindel (23) einleitet.

2. Portal-Radsatzdrehmaschine nach Anspruch 1,
**dadurch gekennzeichnet, dass** das Übersetzungsverhältnis i₁ des Riementriebs (18, 19, 20) zwischen 2:1 und 4:1, vorzugsweise i₁ = 2,8:1 beträgt.

3. Portal-Radsatzdrehmaschine nach Anspruch 1,
**dadurch gekennzeichnet, dass** das Übersetzungsverhältnis i₂ des Planetengetriebes (20, 30, 31) zwischen 5:1 1 und 8:1, vorzugsweise i₂ = 6,14: 1 beträgt.

4. Portal-Radsatzdrehmaschine nach Anspruch 1,
**dadurch gekennzeichnet, dass** das Übersetzungsverhältnis i₃ des Stirnradgetriebes (31, 32) zwischen 2:1 und 5:1, vorzugsweise i₃ = 3,52:1 beträgt.

5. Portal-Radsatzdrehmaschine nach den Ansprüchen 2 bis 4, **dadurch gekennzeichnet, dass** das Gesamtübersetzungsverhältnis i₄ aller Getriebestufen (19, 30, 31, 32) zwischen 20:1 und 160:1, vorzugsweise i₄ = 60,51: 1 beträgt.

6. Portal-Radsatzdrehmaschine nach Anspruch 1,
**dadurch gekennzeichnet, dass** die Drehzahlen des Motors (16, 17) für den Antrieb der Hauptspindel (23) in dem Bereich von nₙₑₙₙ = 1500 m⁻¹ und nₘₐₓ = 4500 min⁻¹ veränderbar sind.

## Claims

1. Portal wheelset lathe for railway wheelsets with a machine stand that spans a workshop rail in a gantry-like fashion and has a headstock attached on either side with a main spindle and a main drive for the main spindle, and with an electric motor that can be synchronised and a gear. The main spindle features a faceplate.
The portal wheelset lathe is **characterised in that** the gear (16, 17, 18, 19, 20, 21, 22, 30, 31) is developed as a multi-step reduction gear (19, 30, 31, 32) for the drive of the main spindle (23) of a headstock (14, 15), that features a belt drive (18, 19, 20), a planetary gear (20, 30, 31) and a spur gear (31, 32) and triggers the rotary movement of the main spindle (23) on the end (29) facing away from the faceplate (24, 25).

2. Portal wheelset lathe in accordance with claim 1, **characterised in that** the transmission ratio i₁ of the belt drive (18, 19, 20) is between 2:1 and 4:1, and preferably i₁ = 2.8:1.

3. Portal wheelset lathe in accordance with claim 1, **characterised in that** the transmission ratio i₂ of the planetary gear (20, 30, 31) is between 5:1 and 8:1, and preferably i₂ = 6.14:1.

4. Portal wheelset lathe in accordance with claim 1, **characterised in that** the transmission ratio i₃ of the spur gear (31, 32) is between 2:1 and 5:1, and preferably i₃ = 3.52:1.

5. Portal wheelset lathe in accordance with claims 2 to 4, **characterised in that** the sum of the transmission ratios i₄ for each gear (19, 30, 31, 32) is between 20:1 and 160:1, and preferably i₄ = 60.51:1.

6. Portal wheelset lathe in accordance with claim 1, **characterised in that** the speeds of the motor (16, 17) for the drive of the main spindle (23) are adjustable within the range of nₙₒₘ = 1500 rpm to nₘₐₓ = 4500 rpm.

## Revendications

1. Tour à trains de roues à portique pour essieux montés ferroviaires avec un bâti de machine, qui forme un pont en forme de portique au-dessus d'une voie de réparations et porte une poupée fixe de chaque côté de la voie de réparations avec une broche principale et un entraînement principal pour la broche principale, avec un moteur synchronisable électriquement et une transmission, de sorte que la broche principale présente un contre-plateau,
**caractérisé en ce que** la transmission (16, 17, 18, 19, 20, 21, 22, 30, 31) pour l'entraînement de la broche principale (23) d'une poupée fixe (14, 15) est conçue comme une transmission primaire (19, 30, 31, 32) à plusieurs étages, qui présente une transmission à courroie (18, 19, 20), un engrenage planétaire (20, 30, 31) et un réducteur à engrenage droit (31, 32) et qui envoie le mouvement rotatif de la broche principale (23) au niveau de l'extrémité non orientée (29) vers le contre-plateau (24, 25) dans la broche principale (23).

2. Tour à trains de roues à portique selon la revendication 1,
**caractérisé en ce que** le ratio de transmission i₁ de la transmission à courroie (18, 19, 20) est compris entre 2:1 et 4:1, de préférence i₁ = 2,8:1.

3. Tour à trains de roues à portique selon la revendication 1,
**caractérisé en ce que** le ratio de transmission i₂ de l'engrenage planétaire (20, 30, 31) est compris entre 5:1 et 8:1, de préférence i₂ = 6,14: 1.

4. Tour à trains de roues à portique selon la revendication 1,
**caractérisé en ce que** le ratio de transmission i₃ du réducteur à engrenage droit (31, 32) est compris entre 2:1 et 5:1, de préférence i₃ = 3,52:1.

5. Tour à trains de roues à portique selon les revendications 2 à 4, **caractérisé en ce que** le ratio de transmission total i₄ de tous les étages de réduction (19, 30, 31,32) est compris entre 20:1 et 160:1, de préférence i₄ = 60,51: 1.

6. Tour à trains de roues à portique selon la revendication 1,
**caractérisé en ce que** les régimes du moteur (16, 17) pour l'entraînement de la broche principale (23) sont modifiables dans une plage de nₙₒₘ = 1500 m⁻¹ et nₘₐₓ = 4500 min⁻¹.
